# EUROPEAN PATENT APPLICATION

(11) **EP 4 530 544 A1**
(43) Date of publication of application: **02.04.2025**
(21) Application number: 24203623.4
(22) Date of filing: 30.09.2024
(51) Int. Cl.: F24F 5/00, F24F 11/88

(54) **SELF-POWERED AIR CONDITIONING SYSTEMS**

(30) Priority: 29.09.2023 US 202363586532 P
(71) Applicant: Carrier Corporation, Palm Beach Gardens, FL 33418 (US)
(72) Inventor: JOARDAR, Arindom, Syracuse 13221 (US)
(74) Representative: Dehns

(57) **Abstract**

An air conditioning system (100) includes a vapor compression cycle having a plurality of components including a compressor (1006) and at least one heat exchanger (1002). A heat transfer fluid is configured to circulate within the vapor compression cycle. An energy storage device (1100) is selectively operable to supply power to one of the plurality of components of the vapor compression cycle. A cooling system (1110; 1120) is associated with the energy storage device (1100). The cooling system (1110; 1120) is a geothermal cooling system and a ground near the energy storage device is a heat sink configured to absorb heat from the energy storage device (1100).

## Description

### BACKGROUND

The embodiments described herein relate to air conditioning systems.

Electrical energy drives a myriad of devices and equipment in commercial, industrial, and residential applications. For example, electrical energy drives lights, motors, household appliances, medical equipment, computers, air conditioning systems, electric vehicle charging stations and many other electrical devices. In most areas, power utilities generate and distribute electricity through an AC power grid. Shortages and/or increased costs associated with fossil fuels and electricity from power utilities significantly impact consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy. For example, a hurricane or earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons. During these times of lost power, the sites may be unable to continue operations.

Often, electrical energy from the power grid is more expensive during times of peak demand. For example, a power utility may employ low-cost electrical generators during periods of minimum demand, while further employing high-cost electrical generators during periods of peak demand. Unfortunately, the existing infrastructure does not adequately address these different costs associated with peak and minimum demands. As a result, commercial, industrial, and residential applications typically draw power from the power grid during times of peak demand, despite the higher costs associated with its generation.

### SUMMARY

According to an embodiment, an air conditioning system includes a vapor compression cycle having a plurality of components including a compressor and at least one heat exchanger. A heat transfer fluid is configured to circulate within the vapor compression cycle. An energy storage device is selectively operable to supply power to one of the plurality of components of the vapor compression cycle. A cooling system is associated with the energy storage device. The cooling system is a geothermal cooling system and a ground near the energy storage device is a heat sink configured to absorb heat from the energy storage device.

Optionally, the cooling system includes a coolant loop fluidly connected to the energy storage device. At least a portion of the coolant loop is positioned vertically beneath a surface level of the ground.

Optionally, the coolant loop includes at least one coolant pipe and at least part of the at least one coolant pipe extends beneath a frost line associated with the ground.

Optionally, the cooling system includes at least one cooling channel arranged at an exterior surface of the energy storage device.

Optionally, the cooling system includes a coolant operable to circulate through the cooling system. The coolant is an internal cooling fluid of the energy storage device.

Optionally, the energy storage device has an internal cooling fluid and the cooling system includes a coolant operable to circulate through the cooling system. The coolant is fluidly distinct from the internal cooling fluid.

Optionally, the energy storage device is arranged at or above a surface level of the ground.

Optionally, at least one of the plurality of components of the vapor compression cycle is arranged within an outdoor unit. The energy storage device being positioned directly beneath the outdoor unit.

Optionally, at least one of the plurality of components of the vapor compression cycle is arranged within an outdoor unit. The energy storage device being positioned remotely from the outdoor unit.

Optionally, at least a portion of the energy storage device is arranged below a surface level of the ground.

Optionally, all of the energy storage device is located below the surface level of the ground.

Optionally, at least part of the energy storage device is located below a frost line associated with the ground.

According to an embodiment, an air conditioning system includes a vapor compression cycle having a plurality of components including a compressor and at least one heat exchanger. A heat transfer fluid is configured to circulate within the vapor compression cycle. An energy storage device is selectively operable to supply power to one of the plurality of components of the vapor compression cycle. A cooling system is associated with the energy storage device. The cooling system includes a heat exchanger and an ambient atmosphere surrounding the heat exchanger is operable to remove heat from the energy storage device.

Optionally, the heat exchanger is located at the energy storage device.

Optionally, the heat exchanger includes at least one cooling channel arranged at an exterior surface of the energy storage device.

Optionally, the heat exchanger is located remotely from the energy storage device.

Optionally, the heat exchanger is mounted to an exterior surface of a building to be conditioned by the air conditioning system.

Optionally, the cooling system includes a coolant operable to circulate through the cooling system. The coolant is an internal cooling fluid of the energy storage device.

Optionally, the energy storage device has an internal cooling fluid and the cooling system includes a coolant operable to circulate through the cooling system. The coolant is fluidly distinct from the internal cooling fluid.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present invention is illustrated by way of example only, and without limitation thereto, in the accompanying figures in which like reference numerals indicate similar elements.
FIG. 1 depicts an air conditioning system.
FIG. 2 depicts a controller of an outdoor unit.
FIG. 3 depicts an electrical architecture of an outdoor unit.
FIG. 4 depicts an electrical architecture of an outdoor unit in.
FIG. 5 depicts an electrical architecture for a fixed speed outdoor unit.
FIG. 6 depicts an electrical architecture for an outdoor unit having a multilevel inverter.
FIG. 7 depicts one phase leg of a five level, multiphase inverter.
FIG. 8 depicts communication between an outdoor unit controller, a thermostat, and a remote system.
FIG. 9 depicts a control process.
FIG. 10 is a perspective view of an outdoor unit of an air conditioning system having an external energy storage device.
FIG. 11 is a schematic diagram of a cooling system for an energy storage device of an air conditioning system.
FIG. 12 is a schematic diagram of another cooling system for an energy storage device of an air conditioning system.
FIG. 13 is a schematic diagram of a cooling system for an energy storage device of an air conditioning system.
FIG. 14 is a schematic diagram of another cooling system for an energy storage device of an air conditioning system.
FIG. 15 is a schematic diagram of yet another cooling system for an energy storage device of an air conditioning system.

### DETAILED DESCRIPTION

With current global electrification and decarbonization efforts, there are incentives to use efficient, optimized, all-electric air conditioning systems that provide comfort while being dispatchable (on-off or adjusted) under different pricing conditions, or after receiving a utility signal. Embodiments described herein relate to an air conditioning system that includes electrical batteries to provide a level of dispatchability needed to interconnect with the electrical power grid.

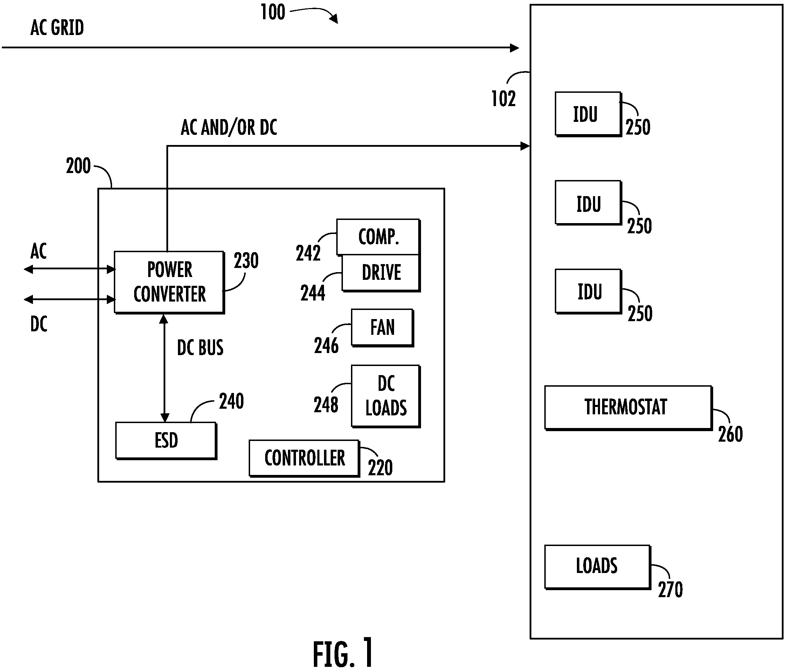

FIG. 1 depicts an air conditioning system 100 in an example embodiment. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system 100 may include known types of systems such as heat pumps, chillers, split systems, package units, etc. An air conditioning system typically includes a vapor compression circuit including a compressor, at least one heat exchanger, such as a condenser and an evaporator for example, and an expansion valve, split between an outdoor unit and an indoor unit, to be described in more detail below. A heat transfer fluid R is configured to circulate through the vapor compression circuit to form an air flow A having a desired temperature that can be delivered to one or more areas to be conditioned.

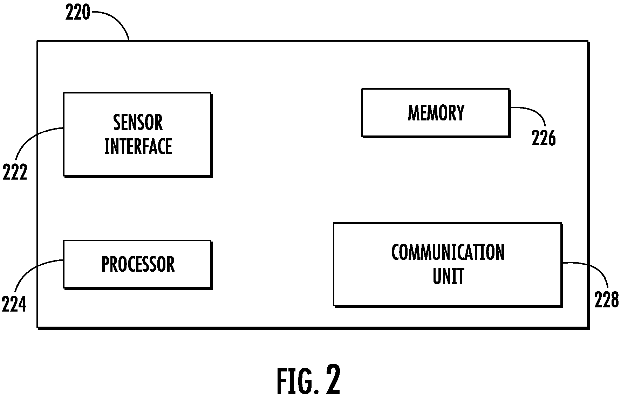

The air conditioning system 100 includes an outdoor unit 200. The outdoor unit 200 may be located on ground level next to a building 102, on a rooftop of the building 102 or any other location. As shown, the outdoor unit 200 includes a controller 220, a power converter 230 an energy storage device (ESD) 240. Although the energy storage device 240 is illustrated within the outdoor unit 200, it should be appreciated that in other embodiments, an energy storage device 240 may alternatively or additionally be located at an indoor unit 250. The controller 220 may communicate with an HVAC controller and/or an energy storage device controller. In other embodiments, a single controller may implement all the functions of the controller 220, HVAC controller and batter controller. FIG. 2 depicts the controller 220 in accordance with an embodiment. The controller 220 includes a sensor interface 222 that can obtain operational parameters of the air conditioning system 100, such as pressures, temperatures, etc. As known in the art, the controller 220 can adjust operation of the air conditioning system 100 based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the air conditioning system 100, such as indoor units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from the indoor unit. This same power line is carried to the outdoor unit although it is generally not used. The ability to take advantage of the power and ground lines of the 4-wire system (referred to as "Power Line Communications" (PLC) technology allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 of the present disclosure may be configured such that, while the PLC high-speed communications is occurring over the Power and Ground line of the 4-wire system, the low-speed RS-485 communication can also be occurring on the Data+ and Data- lines. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including AC-AC, AC-DC, DC-AC and DC-DC. The power converter 230 may operate in a bi-directional manner so that one or all power conversions are bi-directional. As shown in FIG. 1, the power converter 230 is connected to AC and/or DC power sources and/or loads. The power converter 230 may also provide power to loads in the building 102, including the indoor units 250, the thermostat 260 and loads 270. In conventional modes, the loads in building 102 will receive AC power from the AC power grid directly. The controller 220 may choose whether the power will come from the AC power grid or from the power converter 230. Example embodiments of the power converter 230 are described herein.

The energy storage device 240 is configured to provide, under certain circumstances, at least a portion of the power to operate one or more of the outdoor unit 200, the indoor unit(s) 250 and the indoor load(s) 270. The energy storage device 240 may be implemented using apparatus for storing electrical energy including one or more of, for example, a battery, battery modules, battery cells, supercapacitor, etc. The battery 240 may include several cells in either modular form or as a stand-alone, multicell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an ESD management system (ESDMS)) that are electrically coupled to the energy storage device 240 and may be adapted to communicate directly or through the ESDMS to controller 220.

The outdoor unit 200 also includes components used as part of the air conditioning unit, and includes a compressor 242, a compressor drive 244, a fan 246 and DC loads 248. These components are described in further detail herein when relevant to embodiments.

Inside the building 102, one or more indoor units 250 are positioned to condition one or more zones of the building 102. The indoor units 250 may be employed using a variety of known indoor units, including variable air volume (VAV) units, liquid cooled indoor units, etc. A thermostat 260 provides a user interface for the air conditioning system 100, and allows the user to enter operational modes of the air conditioning system 100, enter setpoints for various zones of the system 100, etc. The indoor loads 270 may be supplied electrical power by the outdoor unit 200. The indoor loads 270 include a wide variety of loads, such as appliances, lighting, electric vehicle chargers, etc.

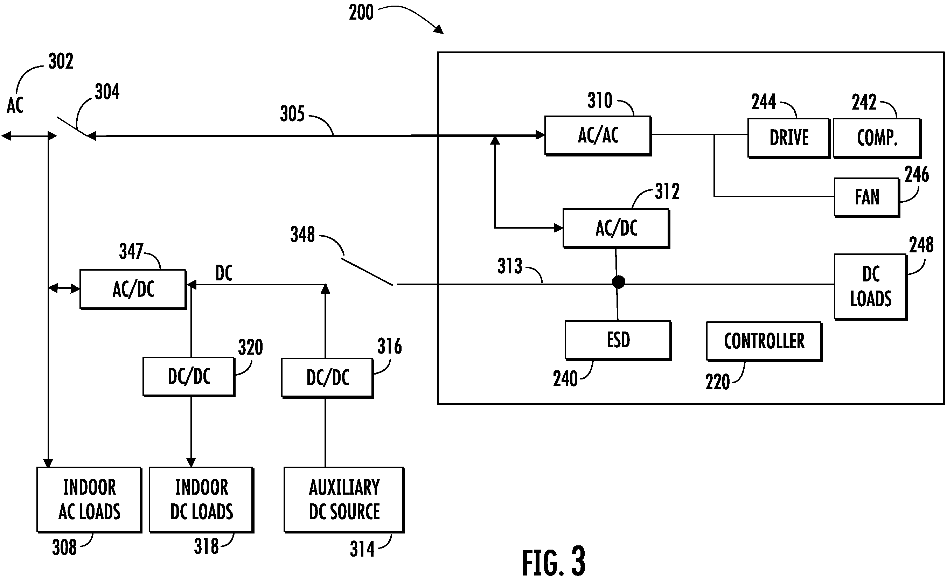

FIG. 3 depicts an electrical architecture of the outdoor unit 200 in an example embodiment. As shown in FIG. 3, an AC power grid 302 is connected to the outdoor unit 200 through a grid disconnect 304, which is under control of the controller 220. This allows the outdoor unit 200 to operate independent of AC power grid 302 under certain conditions, as described in further detail herein.

The AC power grid 302 is connected to indoor AC loads 308 (such as an air handler). The AC power grid 302 is also provided to an AC/AC converter 310 which supplies conditioned AC power to the drive 244 of the compressor 242 and the fan 246. The AC/AC converter 310 may control the amplitude, frequency, phase, etc. of AC power provided to the drive 244 of the compressor 242 and the fan 246. The AC/AC converter 310 may be bi-directional to allow the outdoor unit 200 to feed power from the DC bus 313 to the AC power grid 302.

The AC power grid 302 is also connected to a bi-directional AC/DC converter 312 which interfaces the AC power bus 305 with a DC power bus 313. The DC power bus 313 supplies power to the DC loads 248. Under certain conditions, the DC power bus 313 supplies power to the AC loads (e.g., compressor 242 and fan 246) through the bi-directional AC/DC converter 312 and the AC/AC converter 310. This allows the outdoor unit 200 to operate independent of the AC power grid 302. The bi-directional AC/DC converter 312 also allows the outdoor unit 200 to feed power from the DC bus 313 to the AC power grid 302.

The DC power bus 313 may be powered by the energy storage device 240. In charging mode, the DC power bus 313 is used to charge the energy storage device 240 (charger not shown). The DC power bus 313 may also be powered by one or more auxiliary DC sources 314, such as solar DC power, wind DC power, geothermal DC power, fuel cells, etc. A DC/DC converter 316 may be used to couple the auxiliary DC sources 314 to the DC power bus 313. The DC power bus 313 may provide power to indoor DC loads 318. A DC/DC converter 320 may be used to couple the indoor DC loads 318 to the DC power bus 313. An AC/DC converter 347 may be used to couple the DC power bus 313 to indoor AC loads 308 through a disconnect 348. In some operating modes, the energy storage device 240 is used to power indoor AC loads. The AC/AC converter 310, the AC/DC converter 312, the DC/DC converter 320, the DC/DC converter 316 and the AC/DC converter 347 may be implementations of the power converter 230 in FIG. 1.

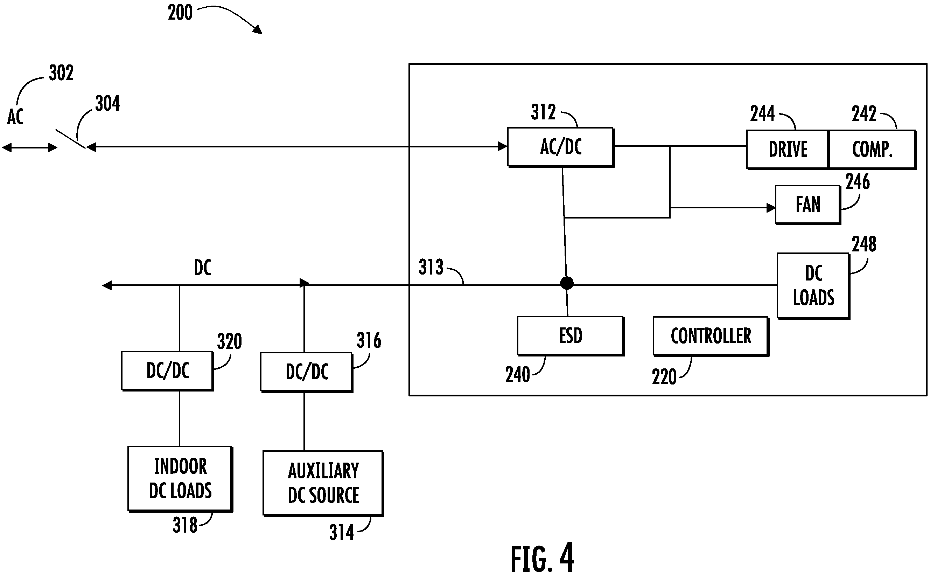

FIG. 4 depicts an electrical architecture of the outdoor unit 200 in another example embodiment. The embodiment in FIG. 4 may be referred to as a DC architecture, whereas the embodiment in FIG. 3 may be referred to as a hybrid AC-DC architecture. In FIG. 4, the drive 244 and the fan 246 are DC powered, and as such, there is no need for the AC/AC converter 310. As with FIG. 3, the architecture of FIG. 4 allows the outdoor unit 200 to operate independent of the AC power grid 302 and to feed power from the DC bus 313 to the AC power grid 302, under certain conditions.

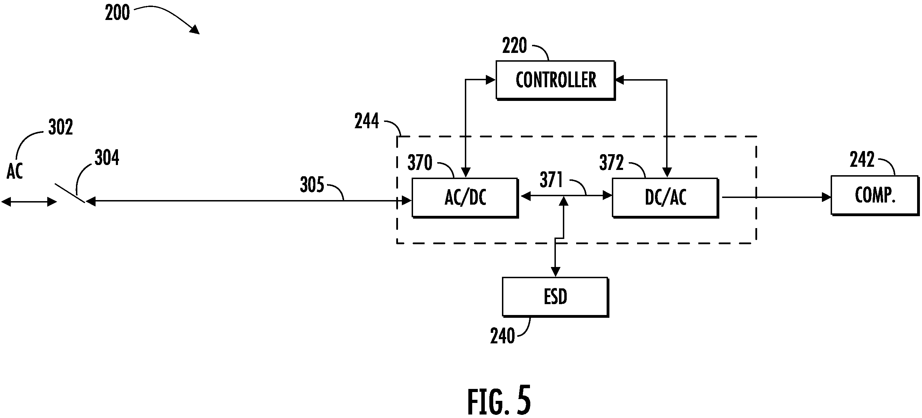

FIG. 5 depicts an electrical architecture for a fixed speed outdoor unit 200 in an example embodiment. Not all components of the outdoor unit 200 are shown for ease of illustration and explanation. For example, the one or more auxiliary DC sources 314 may be connected to the energy storage device 240. In the fixed speed outdoor unit 200, the compressor 242 does not operate at variable speeds and thus the drive 244 may be simplified. As shown in Figure 5, AC power from the AC power grid 302 is supplied through the grid disconnect 304 to the drive 244. The drive 244 includes an AC/DC converter 370 and a DC/AC converter 372. The output of the DC/AC converter 372 is provided to the compressor 242. Both the AC/DC converter 370 and the DC/AC converter 372 operate under the control of the controller 220. Between the AC/DC converter 370 and the DC/AC converter 372 is a DC link 371 that is connected to the energy storage device 240. Under this arrangement, energy storage device 240 may be charged by the drive 244. Alternatively, the energy storage device 240 may provide DC power to the DC link 371 to power the DC/AC converter 372 and the compressor 242. This allows the outdoor unit 200 to operate independent of the AC power grid 302. The AC/DC converter 370 may be bi-directional to allow the outdoor unit 200 to feed power from the energy storage device 240 to the AC power grid 302.

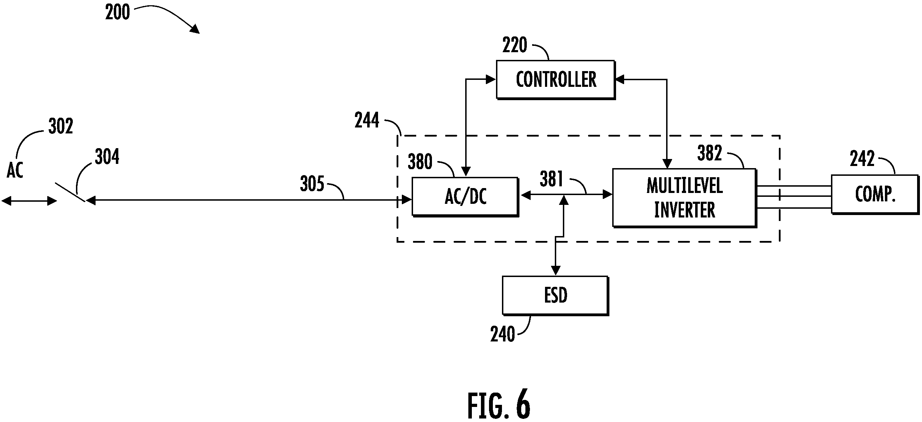

FIG. 6 depicts an electrical architecture for an outdoor unit 200 having a variable speed drive including a multilevel inverter in an example embodiment. Not all components of the outdoor unit 200 are shown for ease of illustration and explanation. For example, the one or more auxiliary DC sources 314 may be connected to the energy storage device 240. As shown in FIG. 6, AC power from the AC power grid 302 is supplied through the grid disconnect 304 to drive 244. The drive 244 includes an AC/DC converter 380 and a multilevel inverter 382. The output of the multilevel inverter 382 is provided to the compressor 242. The output of the multilevel inverter 382 may be a multi-phase, multi-level waveform configured to drive a multiphase motor of the compressor 242. In an example embodiment, the multilevel inverter 382 is a five-level, three phase inverter. In another example embodiment, the multilevel inverter 382 is a three-level, three phase inverter.

The multilevel inverter 382 synthesizes a sinusoidal current waveform to run and control the compressor 242. This is done traditionally by a two-level inverter. Integration with the energy storage device 240 allows for a natural progression to higher order inverters. Three and five level inverters require independent power supplies to set the voltage levels. In the embodiment of FIG. 6, the energy storage device 240 can set the voltage levels. The energy storage device 240 may include internal battery modules connected in series. The multilevel inverter 382 directly uses the battery modules for each requisite voltage level thereby enabling the benefits of a multilevel inverter. The multilevel inverter 382 benefits from lower harmonic output and lower dv/dt device stresses. The multilevel inverter 382 increases reliability through the ability to reconfigure to a lower number of levels after a fault has occurred, through the integration of back-to-back switches or relays, connecting or disconnecting battery modules together.

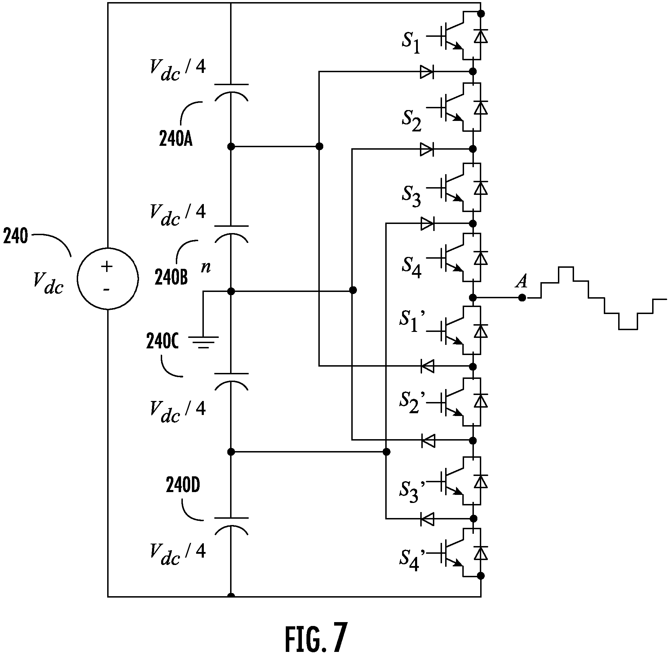

FIG. 7 shows one phase leg of a five level, multiphase inverter in an embodiment of the multilevel inverter 382. The energy storage device 240 includes at least four battery modules 240A, 240B, 240C and 240D, connected in series. The combination of the battery modules 240A, 240B, 240C and 240D, and a neutral point, n, provides the five voltage levels used to create a sinusoidal output waveform on one phase. In general, using N battery module voltages provides for an N+1 level output waveform for each phase. Switches S1-S4 and S 1'-S4' are controlled by the controller 220 to produce a sine wave as known in the art. The multilevel inverter 382 can be reconfigured to fewer levels through the integration of back-to-back switches or relays, connecting or disconnecting battery modules together.

Referring the FIG. 6, both the AC/DC converter 370 and the multilevel inverter 382 operate under the control of the controller 220. Between the AC/DC converter 370 and the multilevel inverter 382 is a DC link 381 that is connected to the energy storage device 240. Under this arrangement, energy storage device 240 may be charged by the drive 244. Alternatively, the energy storage device 240 may provide DC power to the DC link 381 to power the multilevel inverter 382 and compressor 242. This allows the outdoor unit 200 to operate independent of the AC power grid 302. The AC/DC converter 380 may be bi-directional to allows the outdoor unit 200 to feed the AC power grid 302.

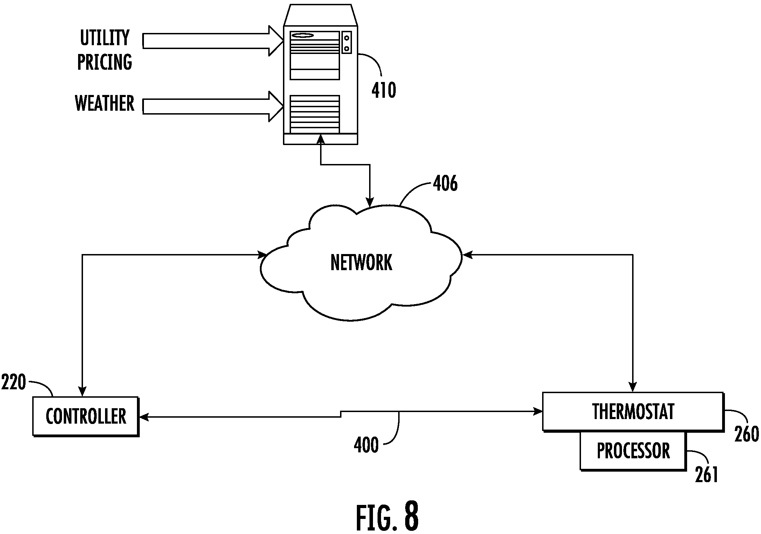

FIG. 8 depicts communication between the outdoor unit controller 220, the thermostat 260 and a remote system 410 in an example embodiment. As noted above, the controller 220 may be integrated as part of an HVAC controller and/or a battery controller. The controller 220 of the outdoor unit 200 communicates with the thermostat 260 over a local link 400. The local link 400 may be a wired connection (e.g., twisted pair, four wire, power line communication, Modbus, CAN bus, etc.) and/or a wireless connection (e.g., WiFi, radio or Bluetooth, NFC, etc.). The thermostat 260 may also be implemented using a software application operating on a user device (e.g., mobile phone, tablet, laptop). The thermostat 260 may also provide occupancy information to the controller 220.

One or both of the controller 220 and the thermostat 260 may be in communication with a remote system 410 over a network 406. The network 406 may be a long range network and may be implemented by a variety of communication protocols. The network 406 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

The remote system 410 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 410 provides information that is used by the controller 220 and/or thermostat 260 to implement an energy management routine that controls how power is consumed by the outdoor unit 200, the indoor units 250 and the loads 270. The information provided by the remote system 410 may include utility pricing, indicating the cost of electricity on the AC power grid 302 and weather information, which may be used to predict future utility pricing and usage of the outdoor unit 200. The utility pricing and weather may be pushed to, or pulled by, the remote system 410 using known networking techniques.

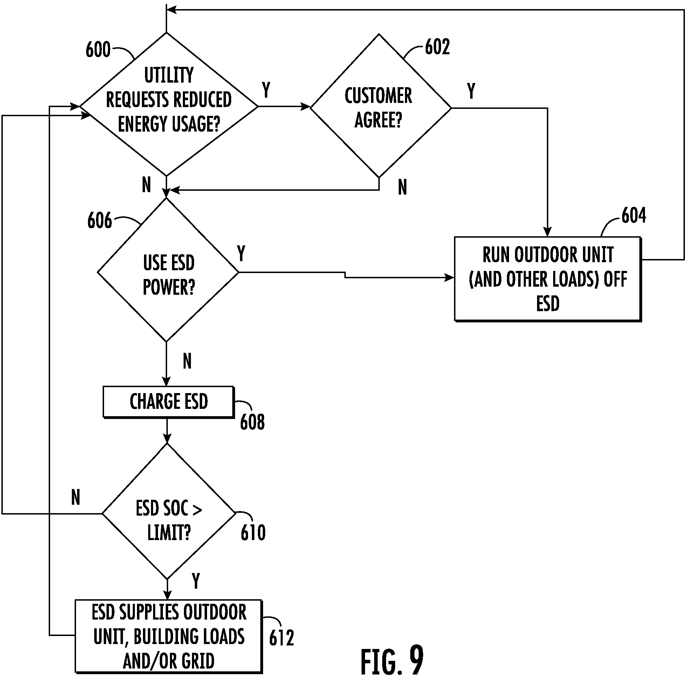

FIG. 9 depicts an energy management process in an example embodiment. The process may be performed by the controller 220 of the outdoor unit 200 and/or by the thermostat 260. At 600, the controller 220 determines if the utility provider has requested a reduction in energy usage. The utility provider may request a reduction in energy usage to avoid a service interpretation (e.g., a brownout). The request for a reduction in energy usage may be accompanied by an incentive (e.g., $5 off next energy bill).

If the utility has requested a reduction in energy usage, flow proceeds to 602 where the customer can approve or deny the request to reduce energy usage. The approve or deny determination may be pre-established by the customer and preprogrammed into the controller 220 and/or the thermostat 260. For example, the consumer may wish to always reduce energy consumption, regardless of the terms. The consumer may wish to never reduce energy consumption, regardless of the terms. The consumer may wish to reduce energy consumption only if the utility offers an incentive. The approve or deny determination at 602 may also be in real time, where the consumer enters an approval or denial of reduced energy consumption through the thermostat 260 or through a mobile device.

If the consumer approves reduced energy usage at 602, flow proceeds to 604 where the outdoor unit 200 (if needed) is powered by the energy storage device 240. This may entail opening the AC disconnect 304 (e.g., power from the AC power grid is zero) and powering the outdoor unit 200 using the energy storage device 240. Operating the outdoor unit 200 using the energy storage device 240 may also include limiting the amount of power used from the AC power grid to a power limit (e.g., 1 kwh). At 604, other loads may be powered by the battery 240, including one or more of the indoor unit(s) 250, and indoor load(s) 270, which may include indoor DC load(s) 318 and/or indoor AC load(s) 308. The process returns to 600. At some point, the energy storage device 240 will lack sufficient charge such that the outdoor unit 200 will need to be powered by the AC power grid 302. The controller 220 can detect when a state of charge (SOC) of the energy storage device 240 is too low to power the outdoor unit 200. Further, the controller 220 can detect when a state of health (SOH) of the energy storage device 240 indicates that the outdoor unit 200 needs to be powered by the AC power grid 302.

If the utility has not requested reduced energy usage at 600, flow proceeds to 606 where the controller 220 determines if the system 100 should use power from the energy storage device 240. One example of a situation where the system 100 should use power from the energy storage device 240 occurs when the utility power is at a peak price. Peak price does not necessarily require that the price for electricity be at a maximum but is generally known in the art as a period of higher than average energy costs. Whether the utility is at a peak price may be determined by utility pricing obtained from the remote system 410 or current or future weather information obtained from the remote system 410. If the utility is at a peak price, flow proceeds to 604 where the outdoor unit 200 (and optionally other loads such as IDUs 250 and loads 270, including indoor AC loads 308 and/or indoor DC loads 318) is powered by the energy storage device 240. The utility power at a peak price is not the only factor that may be relied on in determining that the system 100 should use power from the energy storage device 240.

Another example of a situation where the system 100 should use power from the energy storage device 240 occurs when a consumer requests reduced energy usage. The consumer may use the thermostat 260 to place the system 100 in reduced energy usage mode (e.g., eco-friendly mode) which causes the system to use power from the energy storage device 240.

If at 606, the system 100 should not use power from the energy storage device 240, flow proceeds to 608 where the energy storage device 240 is charged using the AC power grid 302. At 610, the controller 220 determines if the battery state of charge (SOC) is greater than a limit (e.g., 90% charge). If not, flow returns to 600.

It should be noted that the energy storage device 240 may be charged even if the utility power is at a peak price. This may include failure modes, test modes, etc. Thus, charging the energy storage device 240 is not limited to off-peak utility power price times.

If at 610, the energy storage device state of charge (SOC) is greater than a limit, flow proceeds to 612 where the energy storage device 240 may be used to power the outdoor unit (if needed), loads in the building 102 and/or back feed power to the AC power grid 302. The operations at 612 may also include verifying a state of health (SOH) of the energy storage device 240 (e.g., verifying health of battery modules) using a battery management system.

One or more operations of the process of FIG. 9 may be performed by the thermostat 260 if the thermostat 260 is equipped with a processor 261. The processor 261 may be implemented using a general-purpose microprocessor executing a computer program stored on a storage medium to perform the operations described herein. Alternatively, the processor 261 may be implemented in hardware (e.g., ASIC, FPGA) or in a combination of hardware/software. The controller 220 and thermostat may perform all or some of the operations of FIG. 9, in conjunction or individually.

In other embodiments, the controller 220 and/or the thermostat 260 executes a system enhancement routine to improve performance of the entire air conditioning system 100, based on optimization (including model predictive controls) or machine learning techniques, considering carbon impact, energy performance, energy cost, lifecycle cost, lifetime impact on equipment, reliability. The system enhancement routine may operate with or without use of information regarding weather, occupancy, historical usage, customer preferences, equipment performance maps (HVAC, battery), potential for energy outages etc. Machine learning techniques on customer preferences, usage, elasticity of decisions regarding temperature, cost, environmental issues, etc. could be used to improve controls logic, and optimization. Other control strategies such as pre-cooling and preheating, that have an advantage on cost, performance, efficiency, environment, comfort, reliability, may be implemented by the controller 220 and/or the thermostat 260.

As described above, embodiments can be in the form of processorimplemented processes and devices for practicing those processes, such as a controller 220 and/or the thermostat 260. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

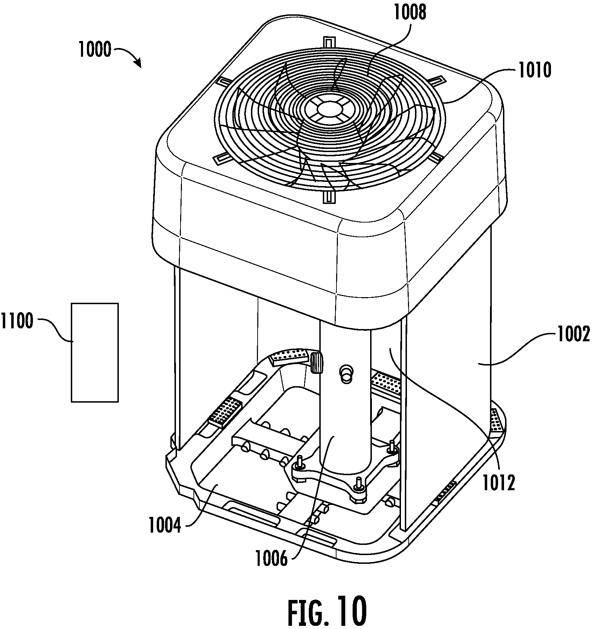

With reference now to FIG. 10, an example of an outdoor unit 1000 of an air conditioning system is illustrated. As shown, the outdoor unit 1000 includes a heat exchanger 1002 having a generally square structure, such as C or U-shaped for example, although embodiments where the heat exchanger 1002 is rectangular, cylindrical, V-shaped, N-shaped, or other shapes are also within the scope of the disclosure. As shown, the outdoor unit 1000 may additionally include a base pan 1004 arranged at the bottom of the outdoor unit 1000 and configured to hold the heat exchanger 1002 in place. The base pan 1004 may also be configured to prevent condensate from collecting in the base pan 1004. A compressor 1006 is arranged in fluid communication with the heat exchanger 1002. As shown, the compressor 1006 is mounted to the base pan 1004 such as at a central location within the interior of the outdoor unit 1000 defined by the heat exchanger 1002. The compressor 1006 is operable to pump a heat transfer fluid through a vapor compression cycle. Examples of the heat transfer fluids contemplated for use in the outdoor unit 1000 described herein include but are not limited to refrigerants such as those with a low global warming potential, CO2, oil, brine, and other suitable fluids. Disposed in communication with a surface of the heat exchanger 1002 is a fan assembly 1008 configured to draw ambient air radially inward, through the heat exchanger 1002, after which the air is discharged upwardly through an opening 1010.

When an energy storage device 1100 is associated with and selectively used to power one or more components of the outdoor unit 1000, the energy storage device 1100 may be located at an exterior of the outdoor unit 1000, such as below the base pan 1004 of the outdoor unit for example. In such embodiments, the energy storage device 1100 may but need not be within the same footprint as the outdoor unit 1000. Alternatively, or in addition, an energy storage device 1100 may be located remotely from the outdoor unit (see FIG. 10). Although not shown, in other embodiments, the energy storage device may be located within an interior of the outdoor unit 100, such as within underneath the heat exchanger 1002, within the base pan 1004 for example. Regardless of the position of the energy storage device, a power connection 1102 may extend between and couple the energy storage device 1100 and one or more components of the outdoor unit 1000 configured to receive power from the outdoor unit 1100.

An energy storage device 1100 as illustrated in FIGS. 10-14 and described herein will generate heat when operated and when charging. Accordingly, thermal management of the energy storage device 1100, regardless of its location relative to the air conditioning system, will be required to reduce the risk of occurrence of a thermal runaway event. With continued reference to FIGS. 10-14, thermal management, and in particular cooling, of an energy storage device 1100 may be performed to maintain the energy storage device 1100 within an allowable temperature range.

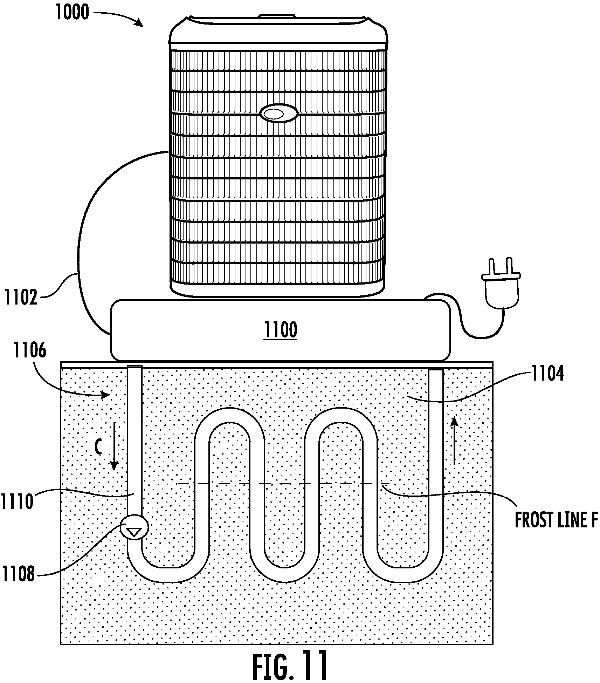

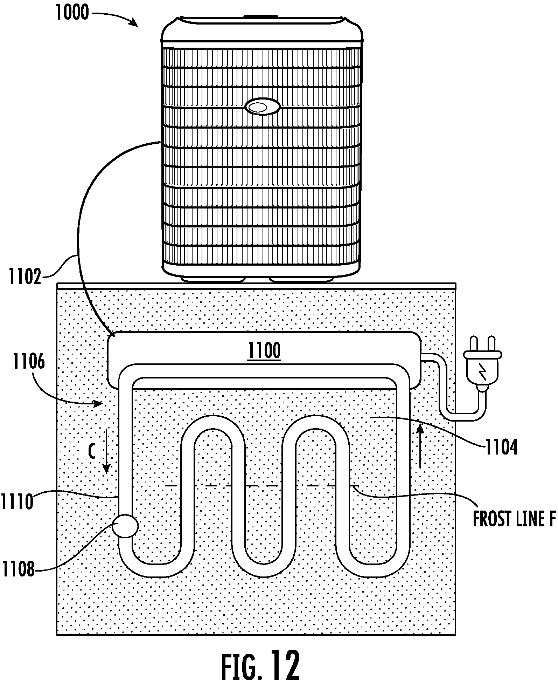

In an embodiment, the ground 1104 beneath or generally adjacent to the outdoor unit is used as a heat sink to cool the energy storage device 1100. With reference to the non-limiting embodiments illustrated in FIGS. 11 and 12, a cooling system is associated with the energy storage device 1100. In an embodiment, the cooling system is configured as a geothermal cooling system where the ground, such as near the energy storage device for example, is a heat sink configured to absorb heat from the energy storage device. As shown, the cooling system includes a coolant loop 1106 having a coolant C disposed therein. A pump or other movement mechanism 1108 may be configured to circulate the coolant C within the coolant loop 1106. The coolant C is configured to absorb heat as it flows through or across a surface of the energy storage device 1100 and the heat is then rejected to the ground surrounding the coolant loop 1106. In some embodiments, such as shown in FIG. 11 for example, the coolant C configured to move through the coolant loop 110 is the cooling fluid already present within the energy storage device 1100. However, in other embodiments, the coolant C may be fluidly separate or fluidly distinct from the internal cooling fluid of the energy storage device 1100. In such embodiments, the coolant C within the coolant loop 1106 is configured to absorb heat from at least one of the cooling fluid located within the energy storage device 1100 and the individual cells of the energy storage device 1100.

The coolant loop 1106 is formed from one or more fluidly connected coolant pipes or conduits 1110, and in an embodiment, at least part of the coolant pipes 1110 are buried within the ground 1104 at a depth below the frost line F associated with the geographical region where the outdoor unit 1000 is located. The frost line F typically varies between 0 feet and 8 feet. The at least one coolant pipe 1110 buried within the ground may have a generally smooth exterior surface. Alternatively, one or more heat transfer enhancing features, such as fins for example, may be arranged at a portion or over an entire exterior surface thereof. The overall length of the coolant loop arranged within the ground 1104 or the length of the coolant loop 1106 arranged beneath the frost line F may be controlled, such as by adding one or more curves or bends to the coolant loop 1106 to achieve a length suitable to dissipate a given amount of heat under normal or extreme operating conditions.

With reference to FIG. 11, the energy storage device 1100 is arranged above the surface level of the ground 1104 at an exterior of the outdoor unit 1000. In the illustrated, non-limiting embodiment, the energy storage device 1100 is positioned directly underneath the outdoor unit 1000. However, embodiments where the energy storage device 1100 is offset from the outdoor unit 1000, is arranged at another location about the outdoor unit 1000 or is even within the outdoor unit 1000 are also contemplated herein. By locating the energy storage device 1100 above ground, the energy storage device 1100 is more easily accessible to perform maintenance thereon. However, at such a position, the energy storage device 1100 may require supplemental heating and/or protection from the environment, such as during cold weather conditions for example.

In the illustrated, non-limiting embodiment of FIG. 12, the energy storage device 1100 is also buried within the coolant loop 1106 underneath the ground surface. The energy storage device 1100 itself may be directly positioned within the ground. However, in other embodiment, the energy storage device 1100 may be arranged within an enclosure (not shown) and the enclosure may or may not be insulated. Although the energy storage device 1100 is illustrated as being located directly underneath the outdoor unit 1000, such as an axial alignment therewith, embodiments where the energy storage device 1100 is buried at a location offset from the outdoor unit 1000 are also within the scope of the disclosure. Similarly, in the non-limiting embodiment, the energy storage device 1100 is illustrated as being arranged vertically above the coolant pipes 1110. However, embodiments where the energy storage device 1100 is located vertically beneath the coolant pipes 1110, and embodiments where the energy storage device 1100 and the coolant pipes 1110 are generally arranged at the same vertical distance from the ground surface (i.e., are within the same horizontal plane) are also within the scope of the disclosure. As previously noted, in some embodiments, at least some or a part of the coolant pipes 1110 may be located at a depth below the frost line F associated with the given geographical region where the outdoor unit 1000 is located. In an embodiment, the energy storage device 1100 may also or alternatively be buried vertically beneath the frost line F.

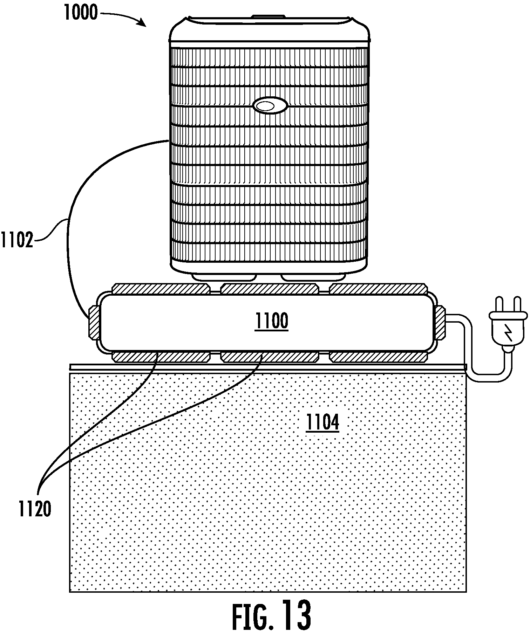

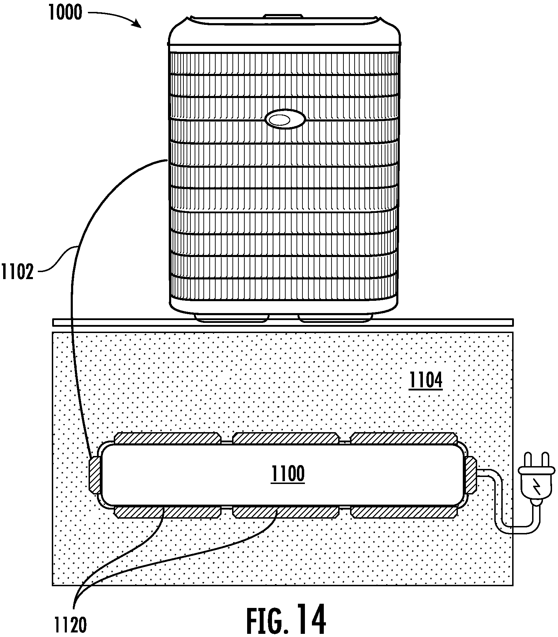

With reference now to FIGS. 13 and 14, in an embodiment, the cooling system includes a heat exchanger for transferring heat away from the energy storage device. In an embodiment, the heat exchanger is provided in the form of one or more cooling channels 1120 formed about the energy storage device 1100. In the illustrated, non-limiting embodiment, the energy storage device 1100 includes a plurality of cooling channels 1120 arranged at one or more exterior surfaces of the energy storage device 1100, and in some embodiments at each of the plurality of exterior surfaces of the energy storage device 1100. The exterior surface of the at least one cooling channel 1120 may be smooth, or alternatively, may include one or more heat transfer enhancing features (not shown), such as fins for example.

In the non-limiting embodiment illustrated in FIG. 13, the energy storage device 1100 is located above ground 1104, such as at a location vertically underneath the cooling unit 1000. In such embodiments, at least some of the one or more cooling channels 1120 may be arranged within the ambient atmosphere surrounding the energy storage device 1100. In an embodiment, the internal cooling fluid of the energy storage device 1100 is configured to flow through the energy storage device 1100 into the one or more cooling channels 1120. Within the energy storage device 1100, the internal cooling fluid absorbs heat from the one or more cells therein. The resulting heated internal cooling fluid is then provided to one or more of the cooling channels 1120. Within the cooling channels 1120, heat is configured to transfer from the internal cooling fluid to the atmosphere, such as via convection for example. In other embodiments, a coolant C, distinct from the internal cooling fluid, may be arranged within or configured to circulate through the one or more cooling channels 1120. In such embodiments, the coolant C acts as a heat sink by absorbing absorb heat from the at least one cell within the energy storage device 1100 and/or heat from the internal cooling fluid. Within the cooling channels 1120, heat is configured to transfer from the coolant C to the surrounding atmosphere. In some embodiments where the energy storage device 1100 is located above ground, one or more of the cooling channels 1120, such as located at a bottom surface of the energy storage device for example, may be positioned to reject heat therefrom to the ground.

With reference now to FIG. 14, the energy storage device 1100 is similar to that of FIG. 13, however, in the illustrated, non-limiting embodiment, the energy storage device 1100 is buried underground. The energy storage device 1100 may be buried within the ground at, at least partially above, or at least partially beneath the frost line F. In embodiments where the energy storage device 1100 is buried, at least some, and in some embodiments, all of the cooling channels 1120 are positioned to reject heat to the surrounding ground 1104. As previously described, the fluid within the cooling channels 1120 may be the internal cooling fluid of the energy storage device 1100, or may be a coolant, distinct from and in a heat transfer relationship with the at least one cell within the energy storage device 1100 and/or the internal cooling fluid thereof. Heat from the fluid within the cooling channels 1120 may be transferred, such as via conduction for example, to the surrounding ground surface.

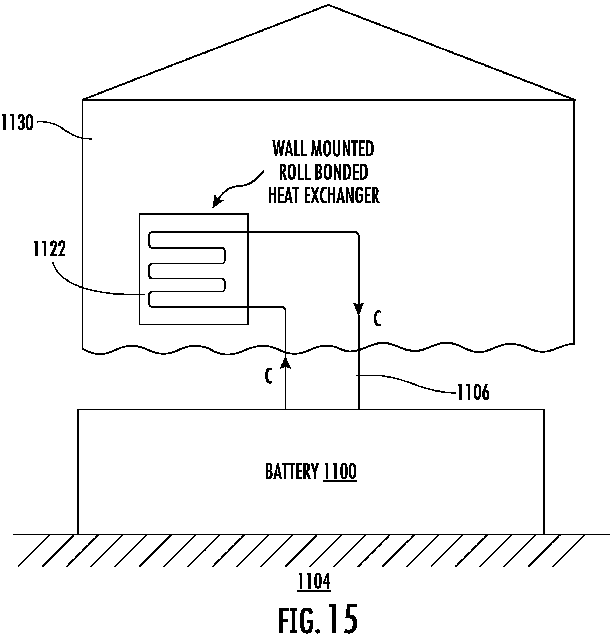

With reference now to FIG. 15, in an embodiment, the cooling system of an energy storage device 1100, such as located above ground for example, includes a coolant loop 1106 fluidly connected to a heat exchanger 1122. In the illustrated, non-limiting embodiment, the heat exchanger 1122 is a roll bonded heat exchanger. The heat exchanger 1122 may be mounted at an exterior surface of a house or other building or structure 1130 being conditioned by the air conditioning system. Alternatively, the heat exchanger 1122 may be integrated with the energy storage device 1100, such as by forming passages in the enclosure of the energy storage device 1100 for example. The internal cooling fluid of the energy storage device 1100 may be configured to flow from the energy storage device 1100, through the coolant loop to the passages of the heat exchanger 1122. Within the passages of the heat exchanger 1122, the internal cooling fluid is configured to transfer the heat absorbed from the one or more cells of the energy storage device 1100 to the surrounding atmosphere, such as via convection for example.

In other embodiments, a coolant C, distinct from the internal cooling fluid, may be arranged within or configured to circulate through the one or more passages of the coolant loop 1106 to the heat exchanger 1122. In such embodiments, the coolant C acts as a heat sink by absorbing absorb heat from the at least one cell within the energy storage device 1100 and/or heat from the internal cooling fluid. Within the passages of the heat exchanger 1122, heat is configured to transfer from the coolant C to the surrounding atmosphere.

An energy storage device having a thermal management system as illustrated and described herein maintains the energy storage device at or below a desired operating temperature, thereby extending the life of the energy storage device. Using the ground as a heat sink configured to absorb some of the heat generated by the energy storage device provides an effective solution with a reduced cost.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the described embodiments can be modified to incorporate any number of variations, alterations, substitutions, combinations, sub-combinations, or equivalent arrangements not heretofore described, but which are commensurate with the scope of the present invention, as defined by the claims. Additionally, while various embodiments have been described, it is to be understood that aspects of the present invention may include only some of the described embodiments. Accordingly, the present invention is not to be seen as limited by the foregoing description but is only limited by the scope of the appended claims.

## Claims

1. An air conditioning system (100) comprising:
a vapor compression cycle having a plurality of components including a compressor (1006) and at least one heat exchanger (1002), and a heat transfer fluid is configured to circulate within the vapor compression cycle;
an energy storage device (1100) selectively operable to supply power to one of the plurality of components of the vapor compression cycle; and
a cooling system (1110; 1120) associated with the energy storage device, wherein the cooling system is a geothermal cooling system and a ground near the energy storage device is a heat sink configured to absorb heat from the energy storage device.

2. The air conditioning system of claim 1, wherein the cooling system includes a coolant loop (1110) fluidly connected to the energy storage device, wherein at least a portion of the coolant loop is positioned vertically beneath a surface level of the ground, and optionally wherein the coolant loop includes at least one coolant pipe and at least part of the at least one coolant pipe extends beneath a frost line (F) associated with the ground.

3. The air conditioning system of claim 1, wherein the cooling system includes at least one cooling channel (1122) arranged at an exterior surface of the energy storage device.

4. The air conditioning system of any claims 1-3, wherein the cooling system includes a coolant operable to circulate through the cooling system, the coolant being an internal cooling fluid of the energy storage device.

5. The air conditioning system of any of claims 1-3, wherein the energy storage device has an internal cooling fluid and the cooling system includes a coolant operable to circulate through the cooling system, the coolant being fluidly distinct from the internal cooling fluid.

6. The air conditioning system of any of the previous claims, wherein the energy storage device is arranged at or above a surface level of the ground.

7. The air conditioning system of claim 7, wherein at least one of the plurality of components of the vapor compression cycle is arranged within an outdoor unit, the energy storage device being positioned directly beneath the outdoor unit.

8. The air conditioning system of claim 7, wherein at least one of the plurality of components of the vapor compression cycle is arranged within an outdoor unit, the energy storage device being positioned remotely from the outdoor unit.

9. The air conditioning system of any of the previous claims, wherein at least a portion of the energy storage device is arranged below a surface level of the ground.

10. The air conditioning system of claim 9, wherein all of the energy storage device is located below the surface level of the ground, and optionally wherein at least part of the energy storage device is located below a frost line associated with the ground.

11. An air conditioning system comprising:
a vapor compression cycle having a plurality of components including a compressor and at least one heat exchanger, and a heat transfer fluid is configured to circulate within the vapor compression cycle;
an energy storage device selectively operable to supply power to one of the plurality of components of the vapor compression cycle; and
a cooling system associated with the energy storage device, wherein the cooling system includes a heat exchanger, an ambient atmosphere surrounding the heat exchanger being operable to remove heat from the energy storage device.

12. The air conditioning system of claim 11, wherein the heat exchanger is located at the energy storage device, and/or wherein the heat exchanger includes at least one cooling channel arranged at an exterior surface of the energy storage device.

13. The air conditioning system of claim 11, wherein the heat exchanger is located remotely from the energy storage device, optionally wherein the heat exchanger is mounted to an exterior surface of a building to be conditioned by the air conditioning system.

14. The air conditioning system of any of claims 11-13, wherein the cooling system includes a coolant operable to circulate through the cooling system, the coolant being an internal cooling fluid of the energy storage device.

15. The air conditioning system of any of claims 11-13, wherein the energy storage device has an internal cooling fluid and the cooling system includes a coolant operable to circulate through the cooling system, the coolant being fluidly distinct from the internal cooling fluid.
